# EUROPEAN PATENT APPLICATION

(11) **EP 4 783 102 A1**
(43) Date of publication of application: **29.07.2026**
(21) Application number: 24868374.0
(22) Date of filing: 20.09.2024
(51) Int. Cl.: G06Q 50/08

(54) **DETERMINATION DEVICE, COMPUTER PROGRAM, AND DETERMINATION METHOD**

(30) Priority: 22.09.2023 JP 2023159257
(71) Applicant: LIXIL Corporation, Tokyo 141-0033 (JP)
(72) Inventor: HAYASHIDA Atsushi, Tokyo 141-0033 (JP)
(74) Representative: karo IP
(86) International application number: PCT/JP2024/033747
(87) International publication number: WO 2025/063298

(57) **Abstract**

A determination device includes: a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of GHG to be reduced as compared with a case where the building or the external structure as the determination target is constructed by using a type of building material as a general predetermined reference, based on the type information and the use amount information.

## Description

### TECHNICAL FIELD

The present disclosure relates to a determination device, a computer program, and a determination method. Priority is claimed on Japanese Patent Application No. 2023-159257, filed on September 22, 2023, the content of which is incorporated herein by reference.

### BACKGROUND ART

In the related art, in a case of ordering a material (hereinafter, referred to as a "building material") required for a building or an external structure, an estimate may be created. For example, Patent Document 1 discloses a technology of creating estimation data by obtaining a type, a standard, a quantity, and a cut dimension of an interior material of a window frame used for each window.

### Citation List

### Patent Document

Patent Document 1: Japanese Unexamined Patent Application, First Publication No. 2005-004485

### SUMMARY OF INVENTION

### Technical Problem

However, in the estimate in the related art, only costs required for the building material are often described. The present disclosure has been made in view of the above circumstances, and provides a technology capable of providing more useful information on a building material.

### Solution to Problem

According to one aspect of the present disclosure, there is provided a determination device including: a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of GHG to be reduced as compared with a case where the building or the external structure as the determination target is constructed by using a type of building material as a general predetermined reference, based on the type information and the use amount information.

### BRIEF DESCRIPTION OF DRAWINGS

[FIG. 1] A schematic block diagram showing a system configuration of an information provision system 100.
[FIG. 2] A schematic block diagram showing a specific example of a functional configuration of a terminal device 10.
[FIG. 3] A schematic block diagram showing a specific example of a functional configuration of a determination device 20.
[FIG. 4] A sequence chart showing a specific example of a process of the information provision system 100.
[FIG. 5] A diagram showing a specific example of information output to an output unit 13 of the terminal device 10.
[FIG. 6] A diagram showing a specific example of information output to the output unit 13 of the terminal device 10.
[FIG. 7] A diagram showing an outline of an example of a hardware configuration of an information processing apparatus 90 applied to the present embodiment.
[FIG. 8] A diagram showing a modification example of the determination device 20.

### DESCRIPTION OF EMBODIMENTS

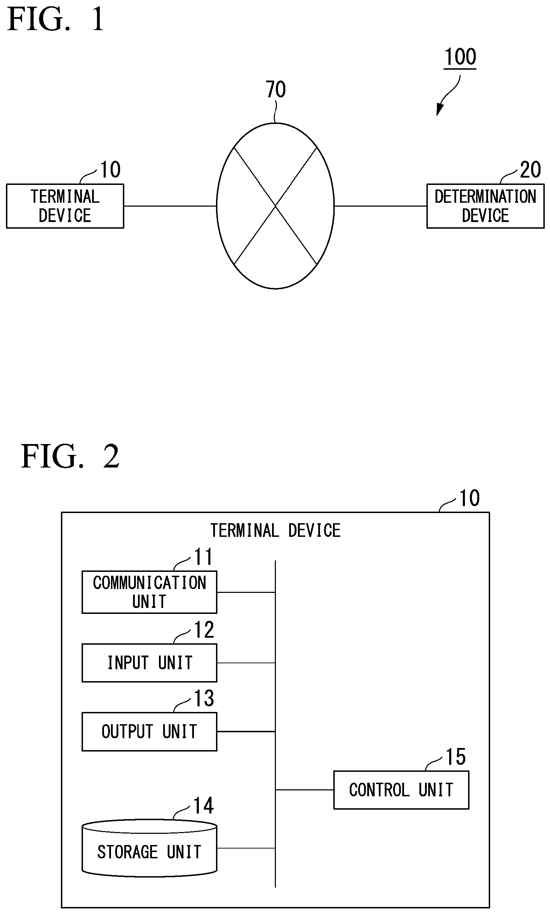

FIG. 1 is a schematic block diagram showing a system configuration of an information provision system 100. The information provision system 100 includes a terminal device 10 and a determination device 20. The terminal device 10 and the determination device 20 are communicably connected to each other via a network 70. The network 70 may be a network using wireless communication or a network using wired communication. The network 70 may be configured by using, for example, the Internet or may be configured by using a local area network (LAN). The network 70 may be configured by combining a plurality of networks. The information provision system 100 provides information on the amount of GHG, which can be reduced according to a type and the amount of a building material to be used, in comparison with a case where a type of building material that is a general predetermined reference when the type of building material is used (for example, a building material made of a type of shaped material (section), which is a general predetermined reference) is used. The general predetermined reference refers to, for example, a case where a recycled material is not used, a case where a shaped material (section) for which recycling rate is unknown is used, or a case where a specific material is used or produced from zero (from a normal raw material). Green House Gas (GHG) is a so-called greenhouse effect gas. A specific example of the GHG includes gases such as carbon dioxide, methane, nitrous oxide fluorocarbons, CFCs, HCFCs, hydrofluorocarbons (HFCs), perfluorocarbons (PFCs), and sulfur hexafluoride (SF6).

A specific example of such a building material is a building material in which aluminum is used as a shaped material (section). Depending on a type of building material, it is possible to realize the effect described above by using aluminum (for example, low carbon) that can be produced with a small GHG emission amount as a shaped material (section). In this case, the low carbon indicates, for example, that the amount of carbon dioxide generated in a manufacturing process of the material (for example, aluminum) used for the building material is smaller than that of the same type of other general materials. For example, it is possible to realize low carbon by using building materials in which aluminum of recycled materials is used. Therefore, by using the building material in which the aluminum of such a recycled material is used, it is possible to reduce the amount of GHG generated in a case of constructing a building or an external structure as a determination target (hereinafter, referred to as a "determination target object"). In addition, it is not always necessary to be limited to recycling, and in a case where low carbon is realized according to a difference in manufacturing method or a difference in raw materials, building materials realized in this manner may be used. In the information provision system 100, information on the reduced amount of GHG is provided. As a specific example of the amount of GHG to be reduced, carbon dioxide may be applied. In the following description, a configuration example in which carbon dioxide is a target to be reduced will be described. In addition, in the following description, each value of the reduction number or the emission amount of carbon dioxide is used. A specific example of the building includes houses and buildings. In this case, for example, the reduction amount or the emission amount of carbon dioxide may be used in units of one building (for example, one house or one building). A specific example of the building material includes a window, an entrance door, a bathroom door, a carport, a fence, or the like. For example, the reduction amount or the emission amount of carbon dioxide may be used in units of one building material (for example, one window and one door). In addition, the reduction amount or the emission amount of carbon dioxide in units of a building may be calculated as a sum of the reduction amount or the emission amount of each building material used in the building. In the following description, the "shaped material (section)" refers to a rolled product, an extruded product, a drawn product, a forged product, and a molded product (regardless of whether or not the product is wound) having a shape in which a cross section is uniform over an entire length. In the present embodiment, a frame material used for a material of a frame constituting an entrance door or a sash or a material of a frame used for a shoji screen is referred to as a shaped material (section).

FIG. 2 is a schematic block diagram showing a specific example of a functional configuration of the terminal device 10. The terminal device 10 is configured by using, for example, an information device such as a smartphone, a tablet, a personal computer, or a dedicated device. The terminal device 10 includes a communication unit 11, an input unit 12, an output unit 13, a storage unit 14, and a control unit 15.

The communication unit 11 is a communication device. The communication unit 11 may be configured as, for example, a network interface. The communication unit 11 performs data communication with another device via the network 70 under control of the control unit 15. The communication unit 11 may be a device that performs wireless communication or a device that performs wired communication.

The input unit 12 is configured by using an existing input device such as a keyboard, a pointing device (mouse, tablet, or the like), a button, and a touch panel. The input unit 12 is operated by a user when inputting an instruction of the user to the terminal device 10. The input unit 12 may be an interface for connecting the input device to the terminal device 10. In this case, the input unit 12 inputs an input signal generated in the input device in response to the input of the user to the terminal device 10. The input unit 12 may be configured by using a microphone and a voice recognition device. In this case, the input unit 12 acquires an acoustic signal generated by utterance of the user, performs voice recognition on an uttered text by the user, and inputs character string information of the recognition result to the terminal device 10. The voice recognition process may be executed by the control unit 15. The input unit 12 may be configured in any manner as long as the instruction of the user can be input to the terminal device 10.

The output unit 13 outputs information in a form that can be recognized by the user. The output unit 13 may be, for example, an image display device such as a liquid crystal display or an organic electro luminescence (EL) display. The output unit 13 may be an interface for connecting an image display device to the terminal device 10. In this case, the output unit 13 generates a video signal for displaying image data and outputs the video signal to the image display device connected to the output unit 13. The output unit 13 may be a device that outputs sound, such as a speaker. The output unit 13 may be an interface for connecting an acoustic output device such as a speaker or a headphone to the terminal device 10. In this case, the output unit 13 generates an acoustic signal for reproducing the acoustic data and outputs the acoustic signal to the acoustic output device connected to the output unit 13. The output unit 13 may be an image forming apparatus that outputs information by forming an image on a sheet, such as a printer. The output unit 13 may be an interface for connecting the image forming apparatus to the terminal device 10. In this case, the output unit 13 generates data indicating an image formed on the sheet and outputs the data to the image forming apparatus connected to the output unit 13. The output unit 13 may be configured as a touch panel integrated with the input unit 12.

The storage unit 14 is configured by using a storage device, such as a magnetic hard disk device or a semiconductor storage device. The storage unit 14 stores data used by the control unit 15. The storage unit 14 stores data necessary for the control unit 15 to perform a process.

The control unit 15 is configured by using a processor such as a central processing unit (CPU) and a memory (main storage device). The control unit 15 functions by the processor executing a program. All or a part of each function of the control unit 15 may be realized by using hardware such as an application specific integrated circuit (ASIC), a programmable logic device (PLD), or a field programmable gate array (FPGA). The program may be recorded on a computer-readable recording medium. The computer-readable recording medium is, for example, a portable medium such as a flexible disk, a magneto-optical disk, a ROM, a CD-ROM, and a semiconductor storage device (for example, a solid state drive (SSD)), or a storage device such as a hard disk and a semiconductor storage device, which is built in a computer system. The program may be transmitted via an electric communication line.

The control unit 15 may execute, for example, an application installed on the own device (terminal device 10). As a specific example of such an application, there is an application provided to the terminal device 10 as a dedicated application of the information provision system 100. Another specific example of such an application is an application of a WEB browser. Such an application may be installed in advance in the terminal device 10, or may be downloaded each time in a case of executing a process of requesting information to the determination device 20. For example, in a case where the application is implemented as a WEB browser application, the terminal device 10 may download and execute the application from a device designated by a WEB server (for example, may be the WEB server or may be another server) in accordance with the connection of the terminal device 10 to the specific WEB server. The control unit 15 operates according to the program of the application in progress.

The control unit 15 controls the terminal device 10 in accordance with an operation of the user or information received from the determination device 20. For example, the control unit 15 transmits the information input by the user operating the input unit 12 to the determination device 20 by using the communication unit 11. For example, in a case where the information transmitted from the determination device 20 is received by the communication unit 11 via the network 70, the control unit 15 outputs the received information from the output unit 13. For example, in a case where the output unit 13 is an image display device, the control unit 15 generates screen data based on the received information and causes the output unit 13 to display the screen data. For example, in a case where the output unit 13 is a voice output device, the control unit 15 generates voice data based on the received information and causes the output unit 13 to output (for example, utter) the voice data. For example, in a case where the output unit 13 is an image forming apparatus, the control unit 15 generates image data based on the received information, and causes the output unit 13 to form the image data on a sheet. The data output in this manner includes an image or a character indicating the information transmitted from the determination device 20.

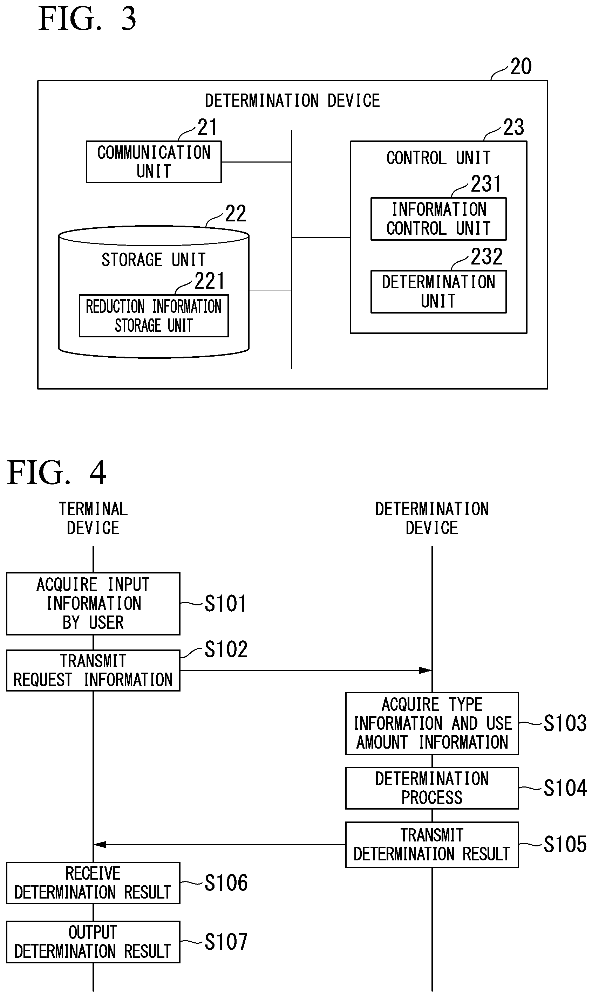

FIG. 3 is a schematic block diagram showing a specific example of a functional configuration of the determination device 20. The determination device 20 is configured by using, for example, an information processing apparatus such as a personal computer or a server device. The determination device 20 includes a communication unit 21, a storage unit 22, and a control unit 23.

The communication unit 21 is a communication device. The communication unit 21 may be configured as, for example, a network interface. The communication unit 21 performs data communication with another device via the network 70 under control of the control unit 23. The communication unit 21 may be a device that performs wireless communication or may be a device that performs wired communication.

The storage unit 22 is configured by using a storage device, such as a magnetic hard disk device or a semiconductor storage device. The storage unit 22 stores data used by the control unit 23. The storage unit 22 may function as, for example, a reduction information storage unit 221.

The reduction information storage unit 221 stores reduction information. The reduction information is information in which type information of a building material and the amount of carbon dioxide to be reduced (hereinafter, referred to as a "unit reduction amount") by using a unit amount of the building material indicated by the type information are associated with each other. As described above, in the present embodiment, the amount of carbon dioxide is indicated as the amount of GHG. The unit amount of the building material may be indicated by the number of products used, may be determined by a weight of the products used, or may be determined by a volume of the products used. The reduction information storage unit 221 may further store a cost (hereinafter, referred to as a "unit increase cost") that is increased by using the unit amount of the building material indicated by the type information with respect to the type information of the building material in association with each other. The reduction information storage unit 221 may further store the type information of the building material in association with the amount of carbon dioxide (hereinafter, referred to as a "unit generation amount") generated by using the unit amount of the building material indicated by the type information. The amount of carbon dioxide generated by using the building material may indicate the amount of carbon dioxide generated in a process of producing the building material.

The control unit 23 is configured by using a processor such as a CPU and a memory. The control unit 23 functions as an information control unit 231 and a determination unit 232 by executing a program via the processor. All or a part of each function of the control unit 23 may be realized by hardware such as an ASIC, a PLD, or an FPGA. The program may be recorded on a computer-readable recording medium. The computer-readable recording medium is, for example, a portable medium such as a flexible disk, a magneto-optical disk, a ROM, a CD-ROM, and a semiconductor storage device (for example, SSD), or a storage device such as a hard disk and a semiconductor storage device, which is built in a computer system. The program may be transmitted via an electric communication line.

The information control unit 231 performs a process on information to be input to the determination device 20 or information output from the determination device 20. For example, the information control unit 231 receives request information transmitted from the terminal device 10 via the communication unit 21. The information control unit 231 passes the type information and the use amount information included in the received request information to the determination unit 232. The information control unit 231 transmits information indicating a determination result obtained by the determination unit 232 to the terminal device 10 via the communication unit 21.

The determination unit 232 determines information on the carbon dioxide reduction effect, based on the type information and the use amount information which are passed from the information control unit 231. In addition, the determination unit 232 may further determine an additional cost or may determine the amount of generated carbon dioxide. Each piece of information determined by the determination unit 232 is transmitted to the terminal device 10 that is a transmission source of the information request by the information control unit 231. Hereinafter, each piece of information will be described.

A specific example of the information on the carbon dioxide reduction effect is the reduction amount of carbon dioxide. The carbon dioxide reduction effect indicates information on carbon dioxide that can be reduced in a case where a type of building material specified by the type information input by the terminal device 10 is used, as compared with a case where a general type of building material is used in a case of constructing the same building or external structure (determination target object). A specific example of such information is the amount (volume or weight) of carbon dioxide that can be reduced. A general type of building material is, for example, a building material in which a recycled material is not used. More specifically, for example, in a case where input type information is a building material using aluminum of a recycled material, the general type of building material may be a building material using non-recycled aluminum.

The additional cost indicates a cost (difference) additionally required in a case where a type of building material specified by the type information input by the terminal device 10 is used, as compared with a case where a general type of building material is used in a case of constructing the same building or external structure (determination target object). The amount of generated carbon dioxide indicates the amount of carbon dioxide generated in a producing process of the building material in a case where the type of building material specified by the type information input by the terminal device 10 is used.

The determination unit 232 determines information on the carbon dioxide reduction effect based on information stored in the reduction information storage unit 221. For example, the information on the carbon dioxide reduction effect may be determined by the following process. The determination unit 232 reads out a unit reduction amount associated with the type information transmitted from the terminal device 10 from the reduction information storage unit 221. The determination unit 232 calculates information (in this case, the carbon dioxide reduction amount) related to the carbon dioxide reduction effect based on the use amount information transmitted from the terminal device 10 and the read-out unit reduction amount.

The determination unit 232 may further determine an additional cost based on the information stored in the reduction information storage unit 221. For example, the additional cost may be determined by the following process. The determination unit 232 reads out the unit increase cost associated with the type information transmitted from the terminal device 10 from the reduction information storage unit 221. The determination unit 232 calculates the additional cost based on the use amount information transmitted from the terminal device 10 and the read-out unit increase cost.

The determination unit 232 may further determine the amount of generated carbon dioxide based on the information stored in the reduction information storage unit 221. For example, the amount of generated carbon dioxide may be determined by the following process. The determination unit 232 reads out the unit generation amount associated with the type information transmitted from the terminal device 10 from the reduction information storage unit 221. The determination unit 232 calculates the amount of carbon dioxide generated in a case where the building material is used, based on the use amount information transmitted from the terminal device 10 and the read-out unit generation amount.

FIG. 4 is a sequence chart showing a specific example of a process of the information provision system 100. First, the control unit 15 of the terminal device 10 acquires information input by a user operating the input unit 12 (step S101). The information input by the user includes information on a building material. More specifically, type information indicating a type of building material and use amount information indicating the amount of the building material (or a shaped material (section)) to be used are input. As a more specific example of the type information, for example, type information as a product of the building material (for example, a product name, a series name, a model number, or the like) may be used. For example, in a case where the product is a window, information (window type information) indicating a type of window may be used as the type information. As a more specific example of the type information, information indicating a size (for example, a vertical length and a horizontal length) of the building material may be further included.

As a more specific example of the use amount information, the number of products to be used may be used, a total weight of the product or a specific material (for example, aluminum, resin, or steel) may be used, a total volume of the specific material may be used, or other information may be used. In a case where the number of products is used as the use amount information, the number of products may be defined for each type of product.

The type information and the use amount information may be input by the user with a specific value, or may be selected by the user from among a plurality of options. In the present embodiment, as a specific example of the input type information, type information of a building material for which aluminum that can be produced with a smaller emission amount of carbon dioxide is used may be used. A specific example of such aluminum includes aluminum of a recycled material. The control unit 15 transmits request information including the input type information and the use amount information to the determination device 20 (step S102). The request information indicates a request for information on carbon dioxide to be reduced according to the type information and the use amount information.

The control unit 23 of the determination device 20 receives the request information transmitted from the terminal device 10 and acquires the type information and the use amount information included in the request information (step S103). The control unit 23 of the determination device 20 determines the amount of GHG (carbon dioxide) that can be reduced in a case where the type of building material is used in the use amount thereof based on the acquired type information and the use amount information (step S104). The control unit 23 transmits information indicating a determination result to the terminal device 10 (step S105). The control unit 15 of the terminal device 10 receives the information indicating the determination result from the determination device 20 (step S106). The control unit 15 outputs the received information indicating the determination result to the user by the output unit 13 (step S107).

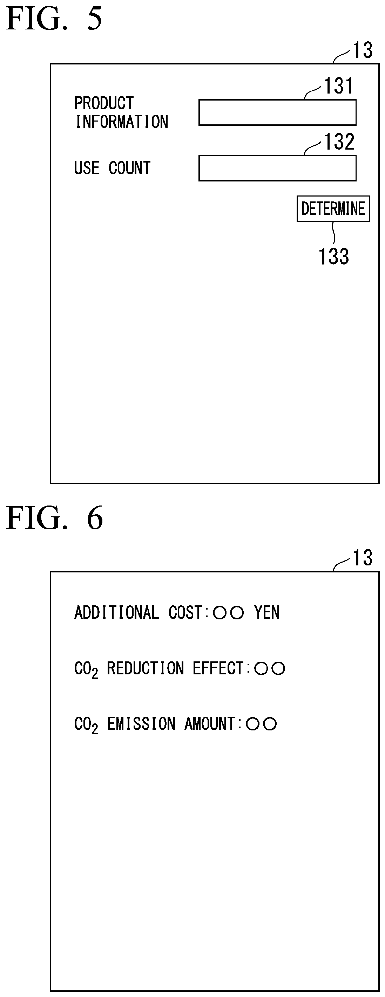

FIG. 5 is a diagram showing a specific example of information output to the output unit 13 of the terminal device 10. FIG. 5 shows a specific example of an image displayed on a screen of the output unit 13 configured as an image display device. FIG. 5 shows a display example of a screen (hereinafter, referred to as an "input screen") at a time of an input. On the input screen, an input field for type information and use amount information and a determination button 133 are displayed. In the example in FIG. 5, a product information input field 131 for inputting "product information" as a specific example of the type information and a number input field 132 for inputting "use count" as a specific example of the use amount information are displayed. The product information may include, for example, information on a magnitude (size) of a building material (product). A user of the terminal device 10 inputs information to each input field by operating the input unit 12 and operates the determination button 133. The control unit 15 of the terminal device 10 generates request information including the information input to each input field at that point in time in response to the operation of the determination button 133, and transmits the request information to the determination device 20.

FIG. 6 is a diagram showing a specific example of information output to the output unit 13 of the terminal device 10. FIG. 6 shows a specific example of an image displayed on a screen of the output unit 13 configured as an image display device. FIG. 6 shows a display example of a screen (hereinafter, referred to as an "output screen") at a time of outputting a determination result in the determination device 20. At least information on the carbon dioxide reduction effect is displayed on the output screen. A specific example of the information on the carbon dioxide reduction effect is the reduction amount of carbon dioxide. In the example in FIG. 6, three values of the additional cost, the carbon dioxide reduction effect, and the carbon dioxide emission amount are shown. All of the three values of the additional cost, the carbon dioxide reduction effect, and the carbon dioxide emission amount are obtained as the determination result by the determination device 20.

In the information provision system 100 configured as described above, by specifying a type and a use amount of a building material used for the building or the external structure (determination target object), information on carbon dioxide reduced in a case where the building material is used is provided as compared with a case where a general building material is used. Therefore, in a case of selecting the building material to be used, it is possible to easily acquire information on using the building material that can be realized with a small GHG emission amount, such as a recycled material. More specifically, it is possible to easily acquire information such as an increase amount of costs caused by using a building material that can be realized with a small GHG emission amount, the amount of GHG (for example, the amount of carbon dioxide) that can be reduced, and the amount of GHG (for example, the amount of carbon dioxide) to be emitted.

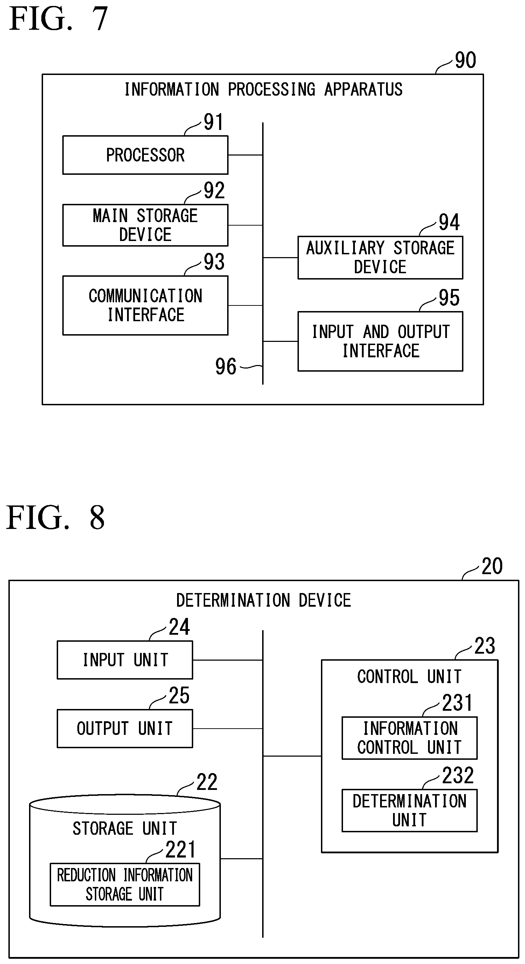

FIG. 7 is a diagram showing an outline of an example of a hardware configuration of an information processing apparatus 90 applied to the present embodiment. The information processing apparatus 90 includes a processor 91, a main storage device 92, a communication interface 93, an auxiliary storage device 94, an input and output interface 95, and an internal bus 96. The processor 91, the main storage device 92, the communication interface 93, the auxiliary storage device 94, and the input and output interface 95 are communicably connected to each other via the internal bus 96. The information processing apparatus 90 may be applied to, for example, the terminal device 10 and the determination device 20. In this case, for example, the communication unit 11 and the communication unit 21 may be configured by using the communication interface 93. For example, the storage unit 14 and the storage unit 22 may be configured by using the auxiliary storage device 94. In addition, the control unit 15 and the control unit 23 may be configured by using the processor 91 and the main storage device 92.

### (Modification Example)

In the present embodiment, the terminal device 10 and the determination device 20 are configured as different devices, but may be configured as an integrated device. FIG. 8 is a diagram showing a modification example of the determination device 20 configured as described above. Such a determination device 20 may be configured by using a device such as a personal computer or a server device, in the same manner as the determination device 20 described above, or may be configured by using an information device such as a smartphone, a tablet, a personal computer, or a dedicated device, in the same manner as the terminal device 10 described above.

The determination device 20 shown in FIG. 8 further includes an input unit 24 and an output unit 25. The input unit 24 and the output unit 25 of the determination device 20 shown in FIG. 8 function in the same manner as each of the input unit 12 and the output unit 13 of the terminal device 10. The control unit 23 operates in response to an operation on the input unit 24, performs a determination process using input type information and input use amount information, and outputs information indicating a determination result using the output unit 25. Such a determination device 20 may be used by, for example, a user. In the determination device 20, the determination result based on the information input by the user by operating the input unit 24 can be obtained without communicating with another device via the network. Therefore, it is possible to improve convenience of the user.

The determination device 20 may be implemented by using a plurality of information processing apparatuses. For example, the determination device 20 may be implemented using a device such as a cloud. For example, in the determination device 20, the storage unit 22 and the control unit 23 may be implemented in information processing apparatuses different from each other. For example, the storage unit 22 of the determination device 20 may be distributed and implemented in a plurality of information processing apparatuses.

Although the embodiments of the present disclosure have been described in detail with reference to the drawings, the specific configuration of the present disclosure is not limited to this embodiment, and designs or the like within a range not departing from the gist of the present disclosure are also included.

### INDUSTRIAL APPLICABILITY

The present invention can be applied to a system that provides information on a building material.

### REFERENCE SIGNS LIST

100 Information provision system
10 Terminal device
11 Communication unit
12 Input unit
13 Output unit
14 Storage unit
15 Control unit
20 Determination device
21 Communication unit
22 Storage unit
23 Control unit
231 Information control unit
232 Determination unit

## Claims

1. A determination device comprising:
a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of GHG to be reduced as compared with a case where the building or the external structure as the determination target is constructed by using a type of building material as a general predetermined reference, based on the type information and the use amount information.

2. A determination device comprising:
a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of carbon dioxide to be reduced as compared with a case where the building or the external structure as the determination target is constructed by using a type of building material as a general predetermined reference, based on the type information and the use amount information.

3. The determination device according to Claim 1,
wherein the building material indicated by the type information is a building material for which a smaller amount of GHG is generated in a manufacturing process of the building material, as compared with the type of building material as the general predetermined reference.

4. The determination device according to Claim 3,
wherein the building material indicated by the type information is a building material formed of recycled aluminum.

5. A determination device comprising:
a control unit configured to determine, in a case where a building or an external structure as a determination target is constructed by using a section used for a building material to be used for the building or the external structure as the determination target in an amount indicated by use amount information indicating a use amount of sections, information on an amount of GHG to be reduced as compared with a case where the building material is made by using a section as a general predetermined reference, based on the use amount information.

6. The determination device according to any one of Claims 1, 2, or 5,
wherein the control unit is configured to further determine a difference in cost between a case where the building or the external structure as the determination target is constructed by using the building material indicated by the type information in the amount indicated by the use amount information and a case where the building or the external structure as the determination target is constructed by using the type of building material as the general predetermined reference.

7. The determination device according to Claim 1 or 5,
wherein the control unit is configured to further determine a difference in cost between a case where the building or the external structure as the determination target is constructed by using the building material indicated by the type information in the amount indicated by the use amount information and a case where the building or the external structure as the determination target is constructed by using the type of building material as the general predetermined reference, and output information including the information on the amount of GHG and the difference in cost.

8. A computer program for causing a computer to function as a determination device, the determination device including:
a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of GHG to be reduced as compared with a case where the building or the external structure as the determination target is constructed by using a type of building material as a general predetermined reference, based on the type information and the use amount information.

9. A determination method comprising:
a step of acquiring type information indicating a type of building material to be used for a building or an external structure as a determination target and use amount information indicating a use amount of building materials; and
a step of determining, in a case where the building or the external structure as the determination target is constructed by using a building material indicated by the type information in an amount indicated by the use amount information, information on an amount of GHG to be reduced as compared with a case where the building or the external structure as the determination target is constructed by using a type of building material as a general predetermined reference, based on the type information and the use amount information.

10. A computer program for causing a computer to function as a determination device, the determination device including:
a control unit configured to determine, in a case where a building or an external structure as a determination target is constructed by using a building material indicated by type information indicating a type of building material to be used for the building or the external structure as the determination target in an amount indicated by use amount information indicating a use amount of building materials, information on an amount of carbon dioxide to be reduced as compared with a case where the building or the external structure as the determination target is constructed by using a type of building material as a general predetermined reference, based on the type information and the use amount information.

11. A determination method comprising:
a step of acquiring type information indicating a type of building material to be used for a building or an external structure as a determination target and use amount information indicating a use amount of building materials; and
a step of determining, in a case where the building or the external structure as the determination target is constructed by using a building material indicated by the type information in an amount indicated by the use amount information, information on an amount of carbon dioxide to be reduced as compared with a case where the building or the external structure as the determination target is constructed by using a type of building material as a general predetermined reference, based on the type information and the use amount information.

12. A computer program for causing a computer to function as a determination device, the determination device including:
a control unit configured to determine, in a case where a building or an external structure as a determination target is constructed by using a section used for a building material to be used for the building or the external structure as the determination target in an amount indicated by use amount information indicating a use amount of sections, information on an amount of GHG to be reduced as compared with a case where the building material is made by using a section as a general predetermined reference, based on the use amount information.

13. A determination method comprising:
a step of acquiring use amount information indicating a use amount of sections used for a building material to be used for a building or an external structure as a determination target; and
a step of determining information on an amount of GHG to be reduced in a case where the building or the external structure as the determination target is constructed by using the section in an amount indicated by the use amount information as compared with a case where the building material is made by using a section as a general predetermined reference, based on the use amount information.
